# EUROPÄISCHE PATENTANMELDUNG

(11) **EP 4 403 395 A1**
(43) Veröffentlichungstag der Anmeldung: **24.07.2024**
(21) Anmeldenummer: 23216295.8
(22) Anmeldetag: 13.12.2023
(51) Int. Cl.: B60K 15/03, B60K 15/067, B60K 15/07

(54) **TANKSYSTEM**

(30) Priorität: 18.01.2023 DE 102023101159
(71) Anmelder: Friedrich Boysen GmbH & Co. KG, 72213 Altensteig (DE)
(72) Erfinder: Bühler, Frank, 71159 Mötzingen (DE); Bessey, Dirk, 71083 Herrenberg (DE); Keck, Mathias, 73730 Esslingen (DE); Faiß, Manuel Eugen, 72181 Starzach (DE)
(74) Vertreter: Manitz Finsterwald Patent- und Rechtsanwaltspartnerschaft mbB

(57) **Zusammenfassung**

Ein Tanksystem für ein Kraftfahrzeug, das mit einem Betriebsstoff, insbesondere Flüssiggas, betreibbar ist, umfasst einen Tank für den Betriebsstoff, der einen zylindrischen Mantel mit einer sich in axialer Richtung erstreckenden Mittenachse aufweist, und zumindest eine an dem Kraftfahrzeug montierbare Halteeinrichtung, an der der Tank mittels zumindest eines Spannbandes fixiert ist, wobei eine in Gebrauchslage des Tanks vertikale Mittenebene des Tanks, die die Mittenachse enthält, eine fahrzeugseitige Seite des Tanks und eine dem Kraftfahrzeug abgewandte Seite des Tanks definiert, und zumindest eine an den Tank angeschlossene Armatur zumindest teilweise auf der fahrzeugseitigen Seite des Tanks angeordnet und unter dem Spannband hindurchgeführt ist.

## Beschreibung

Die Erfindung betrifft ein Tanksystem für ein Kraftfahrzeug, das mit einem Betriebsstoff, insbesondere mit einem gasförmigen oder einem flüssigen Medium, vorzugsweise Flüssiggas, betreibbar ist.

Tanksysteme dienen insbesondere der Lagerung und Bereitstellung von Betriebsmitteln eines Kraftfahrzeugs. Dazu gehören herkömmliche Kraftstoffe wie zum Beispiel Diesel- oder Benzinbetriebsstoff, aber auch Flüssiggas wie zum Beispiel verflüssigter Wasserstoff (LH2) oder verflüssigtes Erdgas (LNG). Solche Tanksysteme umfassen zum Beispiel einen Tank für den Betriebsstoff mit einem zylindrischen Mantel, der eine sich in axialer Richtung erstreckende Mittenachse aufweist, und zumindest eine an dem Kraftfahrzeug montierbare Halteeinrichtung oder Tragekonsole, an der der Tank mittels zumindest eines Spannbandes fixiert ist. Die Tragekonsolen werden beispielsweise seitlich am Fahrgestell oder Rahmen eines Lastkraftwagens angebracht.

Bei üblichen Tanksystemen zur Lagerung von Dieselbetriebsstoff sind beispielsweise zwei L-förmige Stegbleche an den Rahmen eines Fahrzeugs angeschraubt und ein Betriebsstofftank an den Stegblechen mittels Spanngurten oder Spannbändern festgezurrt. Die Spannbänder werden dabei über die Oberfläche des Tankmantels geführt.

Handelst es sich jedoch um Flüssiggastanks, ist eine Montage mit Hilfe von Spannbändern nicht ohne weiteres möglich, da ein Teil der Mantelfläche des Tanks von an den Tank angeschlossenen Armaturen belegt bzw. bedeckt ist. Unter dem Begriff "Armatur" sind beispielsweise Einrichtungen zum Betanken, Entleeren und/oder Entlüften des Tanks zu verstehen, z.B. Stutzen, Flansche, Leitungen, Wärmeübertrager, Ventile o.ä.. Insbesondere kann es vorkommen, dass sich Teile der Armaturen in Längsrichtung über weite Abschnitte des Tankmantels erstrecken, sodass die Spannbänder an nur wenigen Stellen zwischen oder neben den Armaturen auf dem Mantel positioniert werden können. Da im montierten Zustand des Tanks die Enden der Spannbänder an den Tragekonsolen fixiert sind, ist folglich auch die Montageposition der Tragekonsolen an dem Fahrzeugrahmen erheblich eingeschränkt.

Zudem sind die Armaturen bei Betrieb des Kraftfahrzeugs Umwelteinflüssen wie Stößen oder Korrosion ausgesetzt. Werden die Armaturen jedoch durch ein Blech oder Ähnliches geschützt, das zwischen den Spannbändern und den Armaturen angeordnet ist, sind die Armaturen nur schwer zugänglich, was den Betrieb und die Wartung des Tanks bzw. der Armaturen erschwert. Eine solche Lösung ist in der Druckschrift EP 3 121 051 B1 beschrieben. Sie sieht ein Gehäuse vor, das an dem Tankmantel angebracht ist und das einen Zwickel bildet, durch das die Armaturen geführt sind. Die Spannbänder sind über das Gehäuse geführt.

Es ist eine Aufgabe der Erfindung, ein verbessertes Tanksystem für ein Kraftfahrzeug bereitzustellen, das die vorgenannten Probleme ausräumt.

Die vorgenannte Aufgabe wird durch ein Tanksystem für ein Kraftfahrzeug gemäß dem Anspruch 1 und insbesondere dadurch gelöst, dass zumindest eine an den Tank angeschlossene Armatur zumindest teilweise auf einer fahrzeugseitigen Seite des Tanks angeordnet und unter dem Spannband hindurchgeführt ist, wobei eine in Gebrauchslage des Tanks vertikale Mittenebene des Tanks, die die Mittenachse enthält, die fahrzeugseitige Seite des Tanks und eine dem Kraftfahrzeug abgewandte Seite des Tanks definiert.

Die fahrzeugseitige Anordnung der Armatur ermöglicht einen besseren Schutz der Armatur vor Umwelteinflüssen, da beispielsweise Stöße oder Spritzwasser von dem Tank abgefangen werden. Einen zusätzlichen Schutz bietet der Teil des Spannbandes, unter dem ein Abschnitt der Armatur hindurchgeführt ist. Eine solche Anordnung der Armatur unter dem Spannband bewirkt zudem, dass das Spannband an einer beliebigen Position über den Tankmantel geführt werden kann, was wiederum die Montage des Tanks an dem Fahrzeug vereinfacht.

Für eine erleichterte Zugänglichkeit kann die Armatur auf der Tankoberseite angeordnet sein, wobei eine in Gebrauchslage des Tanks horizontale Mittenebene des Tanks, die die Mittenachse enthält, die Tankoberseite und eine Tankunterseite definiert.

Die Halteeinrichtung kann ferner einen Stegabschnitt aufweisen, der zumindest abschnittsweise nicht an dem Mantel anliegt. Bevorzugt liegt der Stegabschnitt in Gebrauchslage nicht im Bereich der Tankoberseite an dem Mantel an.

Zudem kann die Armatur zumindest teilweise in einem Zwickel angeordnet sein, der zwischen dem Mantel, dem Spannband und dem Stegabschnitt der Halteeinrichtung eingeschlossen ist. Dies ermöglicht eine Führung des Spannbandes über die Armatur, ohne dass dabei das Spannband und die Armatur zusammenwirken, d.h. die Armatur wird im montierten Zustand des Tanks nicht durch das Spannband belastet.

Die Halteeinrichtung kann zudem einen Montageabschnitt aufweisen, der an die Krümmung des Mantels angepasst ist und zumindest teilweise an dem Mantel anliegt. Insbesondere kann der Montageabschnitt in Gebrauchslage im Bereich der Tankunterseite zumindest teilweise an dem Mantel anliegen. Dies ermöglicht eine noch stabilere Sicherung des Tanks an der Halteeinrichtung. Gleichzeitig wird das Spannband weniger stark beansprucht, da ein Teil des Gewichts des Tanks von dem Montageabschnitt aufgenommen wird.

Für einen noch besseren Schutz der Armatur kann das Tanksystem des Weiteren ein Gehäuse umfassen, das die Armatur zumindest teilweise abdeckt, wobei das Spannband in axialer Richtung neben dem Gehäuse angeordnet ist. Insbesondere können zumindest zwei Spannbänder vorgesehen sein, zwischen denen das Gehäuse angeordnet ist. Zum einen verhindert diese Anordnung des Spannbandes bzw. der Spannbänder neben dem Gehäuse eine Krafteinwirkung des Spannbandes auf das Gehäuse bzw. eine Quetschung des Gehäuses durch das Spannband. In anderen Worten, die Kraftübertragung erfolgt über die ohnehin stabil auszuführende Manteloberfläche und nicht über ein Gehäuse oder Schutzblech, bei dem die Gefahr besteht, dass es durch das Spannband verbogen wird, wenn es nicht hinreichend massiv ausgestaltet ist. Ein solches Gehäuse ist jedenfalls schwerer (was nachteilig ist) als ein Gehäuse, das nicht durch ein oder mehrere Spannbänder belastet wird. Letzteres kann ein vergleichsweise einfaches Blechbauteil sein. Dadurch, dass das Spannband nicht über das Gehäuse geführt ist, kann das Gehäuse zum anderen einfach demontiert werden, ohne dabei das Spannband lösen zu müssen, d.h. die Armatur ist einfach und schnell auch im montierten Zustand des Tanks für Wartungsarbeiten oder Ähnliches zugänglich.

Für eine noch bessere Wartungsfreundlichkeit kann das Gehäuse segmentiert sein, d.h. das Gehäuse kann zwei oder mehr, insbesondere vier, entlang der axialen Richtung nebeneinander angeordnete Gehäusesegmente umfassen, wobei zwischen den Gehäusesegmenten jeweils ein Spannband vorgesehen ist. Folglich muss für eine Wartung der Armatur nicht das gesamte Gehäuse entfernt werden, sondern es können je nach Bedarf nur einzelne Gehäusesegmente entnommen werden.

Zusätzlich oder alternativ kann das Gehäuse an dem Mantel lösbar und/oder auf- und zuklappbar fixiert sein, was die Benutzerfreundlichkeit weiter erhöht. Insbesondere kann das Gehäuse an dem Mantel mittels zumindest einer Schraub-, Rast-, Steck- und/oder Klemmverbindung und/oder einem Scharnier fixiert sein.

Die Armatur kann durch zumindest eine Öffnung des Gehäuses zumindest abschnittsweise zugänglich sein, was insbesondere das Betreiben und Anschließen der Armatur erleichtert. Die Öffnung kann mit einem Deckel verschließbar sein, um Anschlüsse der Armatur vor Umwelteinflüssen zu schützen.

Des Weiteren kann das Spannband zumindest abschnittsweise eine Beschichtung aufweisen. Die Beschichtung kann eine Gummierung umfassen, die an zumindest einer Kante des Spannbandes vorgesehen ist und/oder das Spannband in Umfangsrichtung umschließt. Die Gummierung kann auch an beiden Kanten des Spannbandes vorgesehen sein. Die Beschichtung dient zur Reduzierung von Schallemissionen und zum Schutz des Spannbandes vor Korrosion und mechanischer Beschädigung.

Die Beschichtung kann ferner in einem dem Gehäuse benachbarten und/oder zugewandten Bereich angeordnet sein. Insbesondere kann die Beschichtung derart ausgestaltet sein, dass sie zwischen dem Spannband und einem Abschnitt des Gehäuses wirkt und eine Bewegung des Spannbandes in vertikaler Richtung limitiert, sodass das Spannband bei Betrieb des Fahrzeugs nicht gegen das Gehäuse reibt oder schwingt.

Zum Schutz des Gehäuses kann das Gehäuse einen Kantenschutz aufweisen. Insbesondere kann ein Dichtelement an zumindest einer dem Spannband zugewandten Kante des Gehäuses vorgesehen sein. Das Gehäuse kann auch (abschnittsweise) beschichtet (z. B. gummiert) sein, insbesondere in einem dem Spannband benachbarten und/oder zugewandten Bereich.

Ferner kann das Gehäuse benachbart zu dem Spannband einen vertikalen Abschnitt aufweisen, der von dem Gehäuse zu dem Mantel hinragt, sodass die Armatur nicht nur in vertikaler Richtung, sondern auch in axialer Richtung geschützt ist. Ein Eindringen von Fremdkörpern in den von dem Gehäuse begrenzten Raum wird so weitgehend verhindert.

Für eine sichere und stabile Montage des Tanks kann ein erstes Ende des Spannbands an dem Stegabschnitt fixiert sein und ein zweites Ende des Spannbands an dem Montageabschnitt fixiert sein. Insbesondere kann das erste Ende des Spannbandes an einem oberen Ende des Stegabschnitts fixiert sein, um eine Quetschung der Armatur durch das Spannband auszuschließen.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1, 2: perspektivische Ansichten einer Ausführungsform eines Tanksystems,
- Fig. 3: eine Querschnittsansicht des Tanksystems von Fig. 1 und 2 in einem Bereich des Spannbandes,
- Fig. 4: eine Querschnittsansicht des Tanksystems von Fig. 1 und 2 in einem Bereich des Gehäuses, und
- Fig. 5A-6B: perspektivische Detailansichten eines Tanksystems gemäß verschiedener Ausführungsformen.

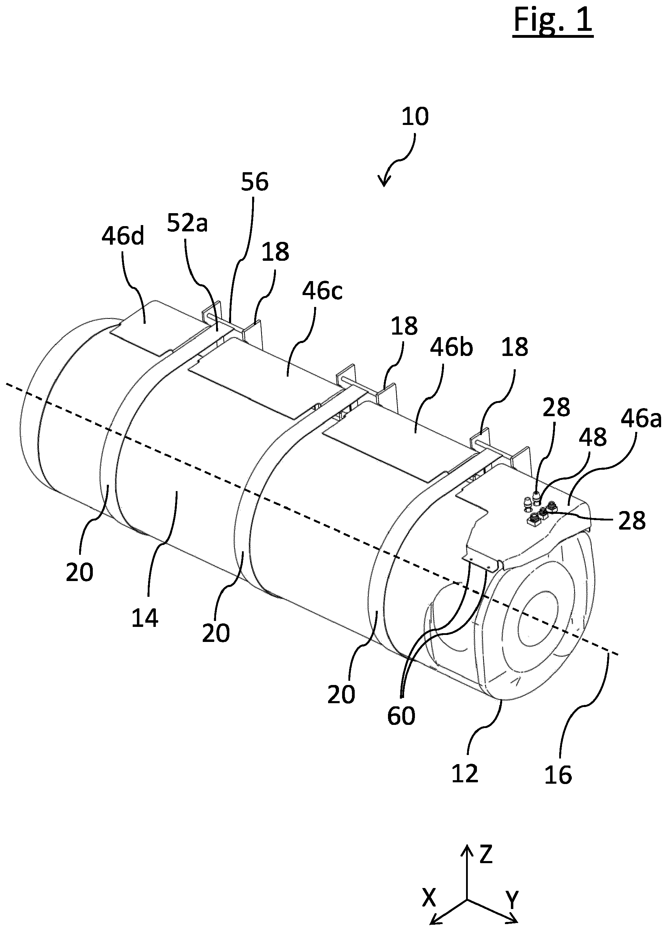

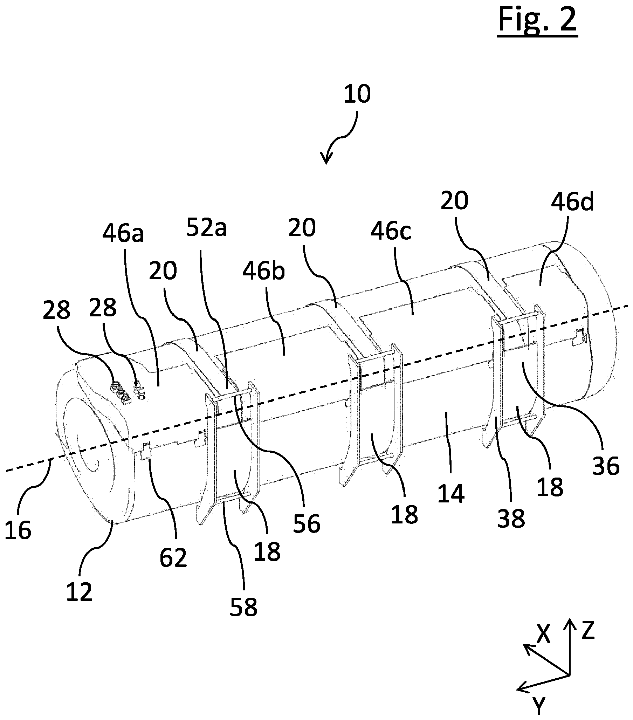

Das in den Figuren 1 und 2 gezeigte Tanksystem 10 für ein Kraftfahrzeug umfasst einen Tank 12 für einen Betriebsstoff, mit dem das Kraftfahrzeug betreibbar ist. Das Kraftfahrzeug kann beispielsweise ein Lastkraftwagen sein. Der Betriebsstoff kann beispielsweise Diesel oder Benzin sein, aber auch Flüssiggas wie zum Beispiel verflüssigtes Erdgas, komprimiertes Erdgas, verflüssigter oder gasförmiger Wasserstoff. Der Tank 12 weist einen zylindrischen Mantel 14 mit einer sich in axialer Richtung Y erstreckenden Mittenachse 16 auf.

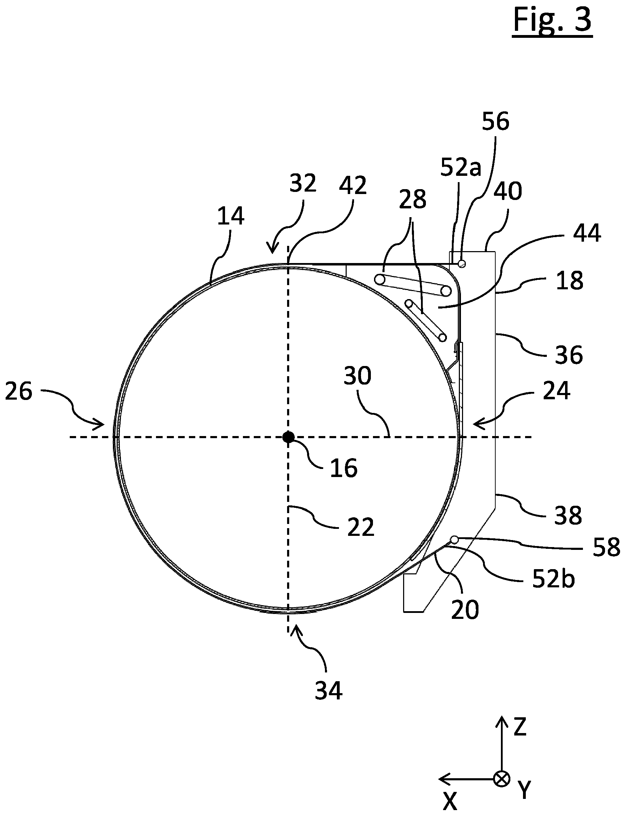

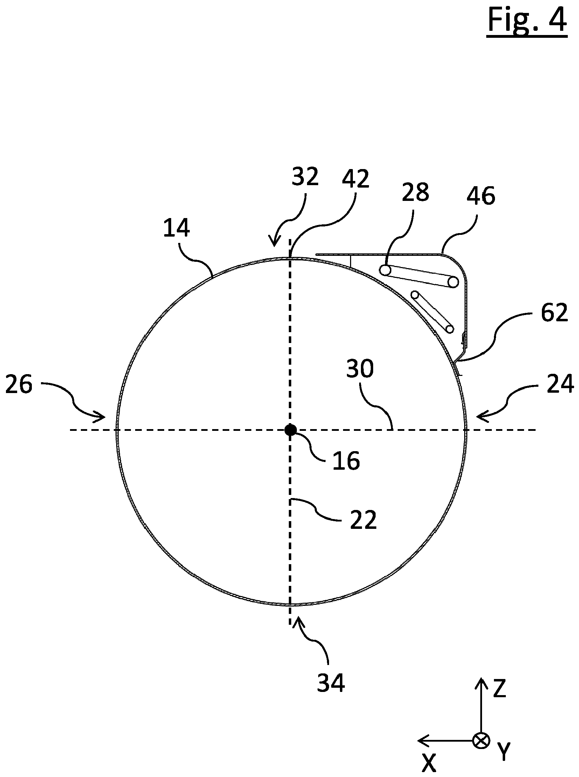

Im Folgenden definiert eine in Gebrauchslage des Tanks 12 (also in einem an den Fahrzeug montierten Zustand) vertikale Mittenebene 22 des Tanks 12, die die Mittenachse 16 enthält, eine fahrzeugseitige Seite 24 des Tanks 12 und eine dem Kraftfahrzeug abgewandte Seite 26 des Tanks 12 (vgl. Figuren 3 und 4, die jeweils eine Querschnittsansicht des Tanksystems im Bereich eines Spannbandes 20 und im Bereich eines Gehäuses 46 zeigen). Eine in Gebrauchslage des Tanks 12 horizontale Mittenebene 30 des Tanks 12, die die Mittenachse 16 enthält, definiert hingegen eine Tankoberseite 32 und eine Tankunterseite 34. Als axiale Richtung Y wird eine Richtung bezeichnet, die parallel zur Mittenachse 16 des Mantels 14 verläuft (vgl. Koordinatensystem in Fig. 1). Als vertikale Richtung Z wird eine Richtung bezeichnet, die senkrecht zur axialen Richtung Y und in einer Richtung von der Tankunterseite 34 zu der Tankoberseite 32 verläuft. Als horizontale Richtung X wird eine Richtung bezeichnet, die senkrecht zu der axialen Richtung Y und der vertikalen Richtung Z verläuft, d.h. die horizontale Richtung verläuft in einer Richtung von der fahrzeugseitigen Seite 24 des Tanks 12 zu der dem Kraftfahrzeug abgewandten Seite 26 des Tanks 12.

Das gezeigte Tanksystem 10 umfasst des Weiteren drei Halteeinrichtungen 18 oder Tragekonsolen, die an einem nicht gezeigten Rahmen oder Chassis eines Kraftfahrzeugs montierbar sind. Wie insbesondere in den Figuren 2 und 3 gezeigt ist, umfasst jede Halteeinrichtung 18 einen Stegabschnitt 36 und einen Montageabschnitt 38. Der Stegabschnitt 36 liegt in der gezeigten Gebrauchslage des Tanks 12 im Bereich der Tankoberseite 32 zumindest teilweise nicht an dem Mantel 14 an. In anderen Worten, der Stegabschnitt 36 steht auf der Tankoberseite 32 von dem Mantel 14 ab, wobei ein Abstand zwischen dem Stegabschnitt 36 und dem Mantel 14 in vertikaler Richtung Z zunimmt. Der Montageabschnitt 38 ist an die Krümmung bzw. den Radius des Mantels 14 angepasst und liegt zumindest teilweise im Bereich der Tankunterseite 34 an dem Mantel 14 an. Abweichend von der gezeigten Ausführungsform kann der Abschnitt 38 auch weiter unter den Tank 12 ragen, um mehr von dessen Gewicht zu tragen.

Der Tank 12 ist mit Hilfe von drei Spannbändern 20 an den jeweiligen Halteeinrichtungen 18 fixiert, wobei ein erstes Ende 52a eines jeden Spannbandes 20 an einem oberen Ende 40 des Stegabschnitts 36 der Halteeinrichtung 18 und ein zweites Ende 52b eines jeden Spannbandes 20 an dem Montageabschnitt 38 der Halteeinrichtung 18 fixiert ist (vgl. Fig. 3). Insbesondere sind die ersten Enden 52a der Spannbänder 20 an Stegen 56 der Stegabschnitte 36 fixiert und die zweiten Enden 52b der Spannbänder 20 an Stegen 58 der Montageabschnitte 38 fixiert. Die Fixierung der Enden 52a, 52b der Spannbänder 20 kann jedoch auch anderweitig erfolgen. Zudem kann entweder keines, eines oder beide Enden 52a, 52b der Spannbänder 20 abnehmbar oder lösbar an den Halteeinrichtungen 18 fixiert sein. Die Halteeinrichtungen 18, insbesondere deren Stegabschnitte 36, sind bevorzugt hinreichend steif ausgebildet, sodass sie sich nicht wesentlich verbiegen oder verziehen, wenn die Spannbänder 20 festgezurrt werden.

Darüber hinaus umfasst das Tanksystem 10 eine, zwei oder mehr als zwei an dem Tank 12 angeschlossene Armaturen 28. In den Figuren 1 und 2 sind nur die Anschlussbereiche der Armaturen 28 deutlich erkennbar. Die Armatur 28 erstreckt sich jedoch zumindest abschnittsweise in axialer Richtung Y bzw. weist eine Erstreckungskomponente in axialer Richtung Y auf. Insbesondere ist es möglich, dass ein nicht unwesentlicher Abschnitt des Mantels 14 in axialer Richtung Y durch Komponenten der Armatur 28 belegt ist.

Wie insbesondere in Fig. 3 zu sehen ist, sind die Armaturen 28 auf der fahrzeugseitigen Seite 24 und auf der Tankoberseite 32 des Tanks 12 angeordnet. Durch diese Anordnung schützt der Tank 12 die Armaturen 28 weitgehend. Die Armaturen 28 sind unter dem Spannband 20 hindurchgeführt, ohne dass dabei das Spannband 20 an den Armaturen 28 anliegt. Die Armaturen 28 sind in einem Zwickel 44 angeordnet, der zwischen dem Mantel 14, dem Spannband 20 und dem Stegabschnitt 36 der Halteeinrichtung 18 eingeschlossen ist. Folglich erfüllt das Spannband 20 zwei Funktionen, nämlich die Sicherung des Tanks 12 an der entsprechenden Halteeinrichtung 18 und den Schutz eines Abschnitts der darunterliegenden Armatur 28.

Das Tanksystem 10 umfasst zudem ein Gehäuse 46, das die Armatur 28 zumindest teilweise abdeckt, d.h. das Gehäuse 46 ist, ebenso wie die Armatur 28, auf der fahrzeugseitigen Seite 24 des Tanks 12 auf der Tankoberseite 32 angeordnet (vgl. Fig. 4). Das Spannband 20 ist in axialer Richtung Y neben dem Gehäuse 46 angeordnet, d.h. das Spannband 20 ist nicht über das Gehäuse 46 geführt. Das Spannband 20 ist zu Fixierung des Tanks 12 entlang der Umfangsrichtung des Mantels 14 geführt und liegt an dem Mantel 14 zumindest auf der dem Fahrzeug abgewandten Seite 26 des Tanks 12 an (vgl. Fig. 3). Das Gehäuse 46 kann an den Mantel 14 geschweißt sein. Bevorzugt ist das Gehäuse 46 aber lösbar und/oder auf- und zuklappbar an dem Mantel 14 fixiert. Die Armatur 28 kann durch zumindest eine Öffnung 48 des Gehäuses 46 zugänglich sein (vgl. Fig. 1), wobei die Öffnung 48 mit einem Deckel verschließbar sein kann (nicht gezeigt).

In der in den Figuren 1 und 2 gezeigten Ausführungsform umfasst das Gehäuse 46 vier entlang der axialen Richtung Y nebeneinander angeordnete Gehäusesegmente 46a-d, wobei die Gehäusesegmente 46a-d (bis auf einen kleinen Teil des Segments 46a) auf der fahrzeugseitigen Seite 24 des Tanks 12 auf der Tankoberseite 32 angeordnet sind und die Armaturen 28 zumindest teilweise abdecken.

Zwischen den Gehäusesegmenten 46a-d ist jeweils ein Spannband 20 vorgesehen, das ebenfalls als Abdeckung für die Armaturen 28 dient. Die Spannbänder 20 sind dabei zwischen den Gehäusesegmenten 46a-d in Umfangsrichtung über zumindest die Hälfte des Mantels 14 geführt, die dem Fahrzeug abgewandt ist. Das Gehäusesegment 46a, das an einem vorderen Ende des Tanks 12 angeordnet ist, weist Öffnungen 48 für Anschlüsse der Armaturen 28 auf.

Wie in Fig. 1 zu sehen ist, ist das Gehäusesegment 46a mittels zweier Schrauben 60 auf der Tankoberseite 32 an dem Mantel 14 festgeschraubt. Wie in Fig. 2 gezeigt ist, sind die Gehäusesegmente 46a-d auf der fahrzeugseitigen Seite 24 zudem mittels jeweils zwei Rastelementen 62 an dem Mantel 14 fixiert. Dadurch kann jedes Gehäusesegment 46a-d einzeln entnommen werden, ohne dafür ein Spannband 20 lösen zu müssen. Zusätzlich oder alternativ hierzu können die Gehäusesegmente 46a-d aber auch mittels nicht gezeigter Klemm- oder Steckverbindungen lösbar an dem Mantel 14 fixiert sein.

Zudem ist es möglich, dass die Gehäusesegmente 46a-d mittels Scharnieren auf- und zuklappbar an dem Mantel 14 fixiert sind. Beispielsweise können zusätzlich oder alternativ zu den Klemm-, Rast- oder Steckverbindungen Scharniere vorgesehen sein. Im Gegensatz dazu ist es aber auch denkbar, dass die Gehäusesegmente 46a-d an den Mantel 14 geschweißt sind.

Es versteht sich, dass die Anzahl an Spannbändern 20 bzw. Halteeinrichtungen 18 nicht auf drei beschränkt ist. Beispielsweise können auch vier oder mehr oder nur zwei Spannbänder 20 und Halteeinrichtungen 18 vorgesehen sein. Entsprechend kann auch die Anzahl an Gehäusesegmenten variieren. Beispielsweise ist eine nicht gezeigte Ausführungsform möglich, bei der der Tank 12 mittels zwei Spannbändern 20 an jeweiligen Halteeinrichtungen 18 fixiert ist. Dabei kann ein Gehäuse 46 zwischen den beiden Spannbändern 20 angeordnet sein, oder es können Gehäusesegmente zwischen und/oder neben den Spannbändern 20 angeordnet sein.

In der gezeigten Ausführungsform sind die Armaturen 28 überwiegend auf der fahrzeugseitigen Seite 24 des Tanks 12 auf der Tankoberseite 32 angeordnet. Es sind jedoch auch nicht gezeigte Ausführungsformen möglich, bei der die Armaturen 28 überwiegend auf der fahrzeugseitigen Seite 24 des Tanks 12 auf der Tankunterseite 34 angeordnet sind. Entsprechend liegt bei einer solchen Konfiguration der Montageabschnitt 38 im Bereich der Tankoberseite 32 zumindest teilweise an dem Mantel 14 an, der Stegabschnitt 36 liegt im Bereich der Tankunterseite 34 zumindest teilweise nicht an dem Mantel 14 an und das Gehäuse 46 ist auf der fahrzeugseitigen Seite 24 des Tanks 12 auf der Tankunterseite 34 angeordnet.

Ferner ist eine nicht gezeigte Ausführungsform möglich, bei der Armaturen 28 auf der Tankoberseite 32 und der Tankunterseite 34 angeordnet sind. In diesem Fall weisen die Halteeinrichtungen 18 keine Montageabschnitte 38 auf. Insbesondere weisen hier die Halteeinrichtungen 18 zwei Stegabschnitte 36 auf, die jeweils zumindest teilweise nicht an dem Mantel 14 anliegen, und Gehäuse 46 sind entsprechend auf der Tankoberseite 32 und der Tankunterseite 34 vorgesehen.

Um unter anderem die Haltbarkeit des Spannbandes 20 zu verbessern, kann das Spannband 20 zumindest abschnittsweise eine Beschichtung aufweisen, die bevorzugt ein elastisches Material umfasst. Die Beschichtung kann eine Gummierung sein. Das Spannband 20 kann die Beschichtung entlang seiner Längsrichtung und/oder Umfangsrichtung vollständig oder abschnittsweise aufweisen. Beispielsweise kann die Beschichtung nur in einem Abschnitt, in dem das Spannband 20 an dem Mantel 14 anliegt, und/oder in einem Abschnitt nahe dem Gehäuse 46 vorgesehen sein. Zudem kann die Beschichtung nur auf einer oder beiden Kanten des Spannbandes 20 angeordnet sein. Die Beschichtung kann sich jedoch auch entlang der gesamten Länge des Spannbandes 20 erstrecken und/oder das Spannband 20 in Umfangsrichtung vollständig umschließen. Die Beschichtung dient insbesondere zum Schutz des Spannbandes 20 und benachbarter Bauteile, wie die Armatur 28 und das Gehäuse 46, sowie zur Reduzierung von durch Schwingungen und Reibungen des Spannbandes 20 hervorgerufenen Schallemissionen.

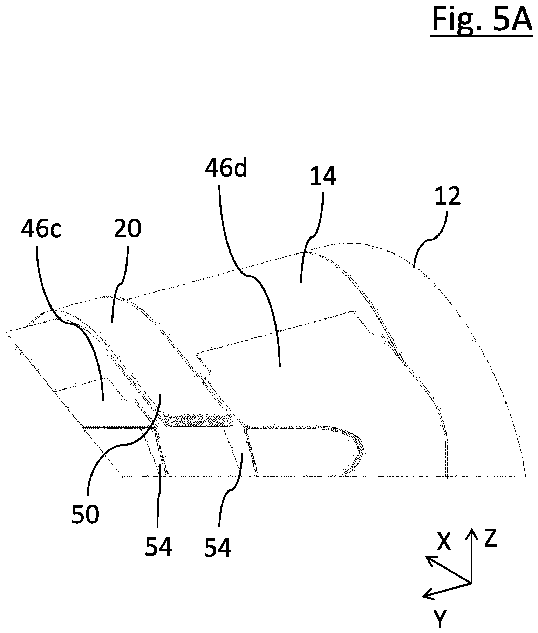

In der in Fig. 5A gezeigten Ausführungsform weist das Spannband 20 eine Beschichtung 50 in Form einer Gummi- oder Elastomerummantelung auf, die das Spannband 20 im Wesentlichen vollständig in Umfangsrichtung umschließt und die sich im Wesentlichen entlang der gesamten Länge des Bands 20 erstreckt. Durch die Ummantelung ist die Oberfläche des Spannbandes 20 weitgehend oder sogar vollständig vor Umwelteinflüssen geschützt.

Es besteht jeweils ein (geringfügiger) Abstand zwischen der Beschichtung 50 und einem vertikalen Abschnitten 54 eines benachbarten Gehäusesegments 46c, 46d. Die vertikalen Abschnitte 54 der Gehäusesegmente 46c, 46d ragen von dem Gehäuse 46 zu dem Mantel 14 hin und bilden somit Seitenwände, die den Innenraum der Segmente 46c, 46d vor Umwelteinflüssen schützen. Die Abschnitte 54 können Öffnungen und/oder Ausnehmungen für die Armaturen 28 aufweisen. Sie können einstückig mit dem Rest der Segmente 46c, 46d ausgebildet sein (in Fig. 5A rechter Abschnitt 54) oder separate Bauteile sein, die an dem Rest der Segmente 46c, 46d befestigt (z.B. verschweißt) sind (in Fig. 5A linker Abschnitt 54).

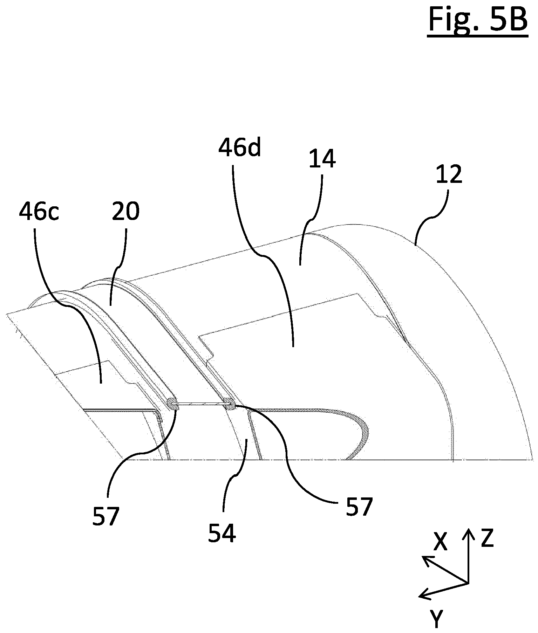

Die in Fig. 5B gezeigte Ausführungsform unterscheidet sich von der in Fig. 5A gezeigten im Wesentlichen dadurch, dass die Beschichtung 50 das Spannband 20 in Umfangsrichtung nicht vollständig umschließt, d.h. die Gummierung ist hier in Form von zwei an den Kanten des Spannbandes 20 angeordneten Dichtlippen 57 ausgebildet. Die Dichtlippen 57 können bei Verschleiß einfach und schnell ausgetauscht werden, ohne dabei das komplette Spannband 20 wechseln zu müssen.

Anstelle einer Gummierung kann es sich bei den Dichtlippen 57 auch um (feste) Kunststoffbauteile handeln.

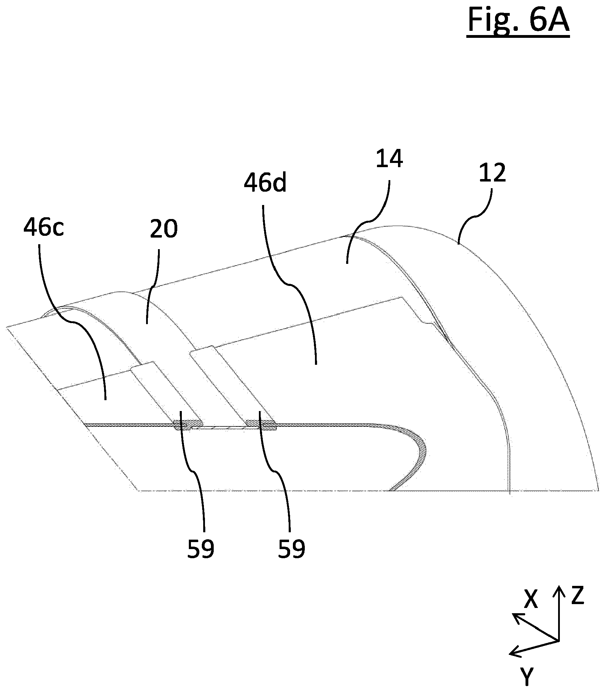

Die in Fig. 6A gezeigte Ausführungsform unterscheidet sich von den in den Figuren 5A und 5B gezeigten im Wesentlichen dadurch, dass das Gehäuse 46 keinen vertikalen Abschnitt 54 sondern eine dem Spannband 20 zugewandte Kante mit einer Beschichtung in Form eines Kantenschutzes 59 aufweist. Insbesondere weisen die Kanten benachbarter Gehäusesegmente 46c, 46d jeweils einen Kantenschutz 59 auf. Der Kantenschutz 59 ist bevorzugt aus elastischem Material gefertigt (Kunststoffbauteile sind ebenfalls denkbar) und ist in der gezeigten Variante als eine Art Dichtelement oder Dichtlippe ausgestaltet, die auf die Kanten der Gehäusesegmente 46c, 46d gesteckt ist und die auf einem Oberflächenabschnitt das Spannbands 20 aufliegt. Dadurch wird eine Bewegung des Spannbandes 20 in vertikaler Richtung Z begrenzt und der Zwickel 44, in dem ein Abschnitt der Armatur 28 angeordnet ist, besser gegen Umwelteinflüsse abgedichtet. Zudem werden Verschließerscheinungen des Spannbandes 20 im Bereich der Gehäusesegmente 46c, 46d, die beispielsweise durch Schwingungen des Spanbandes 20 verursacht werden, minimiert.

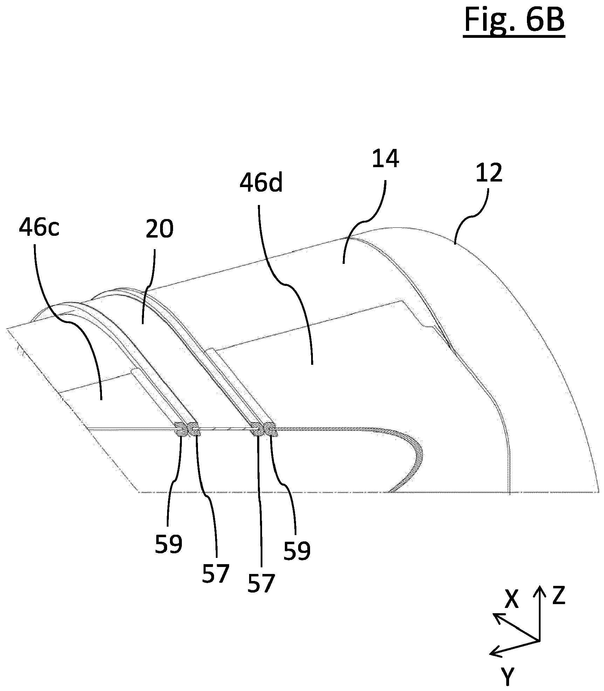

Bei der in Fig. 6B gezeigten Ausführungsform weist das Spannband 20, analog zu der in Fig. 5B gezeigten Ausgestaltung, eine Gummierung in Form von zwei an den Kanten des Spannbandes 20 angeordneten Dichtlippen 57 auf und die Kanten der angrenzenden Gehäusesegmente 46c, 46d weisen ebenfalls jeweils eine Dichtlippe 59 auf. Die Dichtlippen 57 des Spannbandes 20 liegen jeweils an den angrenzenden Dichtlippen 59 der Kanten der Gehäusesegmente 46c, 46d an, sodass auch hier der Zwickel 44 abgedichtet wird und das Spannband 20 sowie angrenzende Komponenten geschützt werden.

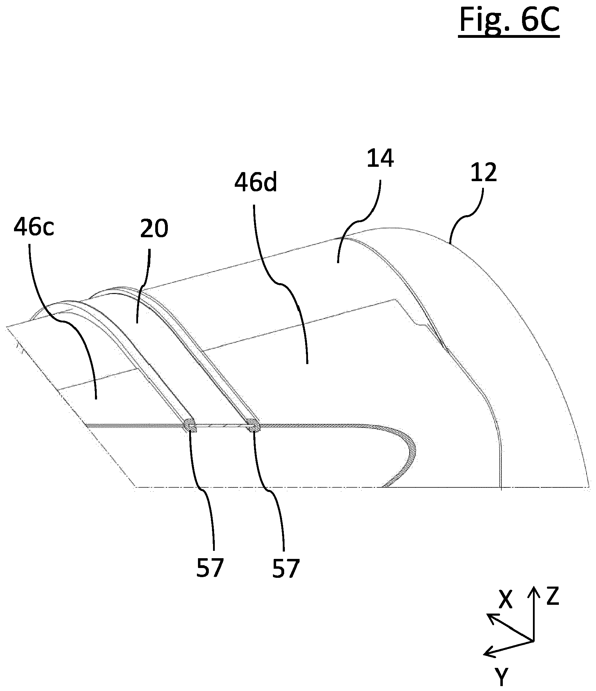

Im Gegensatz dazu weisen bei der in Fig. 6C gezeigten Ausführungsform nur die Kanten des Spannbandes 20 Dichtlippen 57 auf, die an den Kanten der Gehäusesegmente 46c, 46d anliegen (siehe auch Fig. 5B). Auch werden eine Abdichtung des Zwickels 44 gewährleistet und das Spannband 20 sowie umliegende Komponenten geschützt.

Es versteht sich, dass Merkmale, die in Bezug auf bestimmte Ausführungsbeispiele der Erfindung beschrieben wurden, mit denen anderer Ausführungsbeispiele kombiniert werden können.

### Bezugszeichenliste:

- 10: Tanksystem
- 12: Tank
- 14: Mantel
- 16: Mittenachse
- 18: Halteeinrichtung
- 20: Spannband
- 22: vertikale Mittenebene
- 24: fahrzeugseitige Seite des Tanks
- 26: dem Kraftfahrzeug abgewandte Seite des Tanks
- 28: Armatur
- 30: horizontale Mittenebene des Tanks
- 32: Tankoberseite
- 34: Tankunterseite
- 36: Stegabschnitt
- 38: Montageabschnitt
- 40: oberes Ende des Stegabschnitts
- 42: obere Mitte des Mantels
- 44: Zwickel
- 46: Gehäuse
- 46a-d: Gehäusesegmente
- 48: Öffnung des Gehäuses
- 50: Beschichtung
- 52a, b: erstes, zweites Ende des Spannbandes
- 54: vertikaler Abschnitt des Gehäuses
- 56: Steg des Stegabschnitts
- 58: Steg des Montageabschnitts
- 57,59: Dichtlippe
- 60: Schrauben
- 62: Rastverbindung
- X: horizontale Richtung
- Y: axiale Richtung
- Z: vertikale Richtung

## Patentansprüche

1. Tanksystem (10) für ein Kraftfahrzeug, das mit einem Betriebsstoff, insbesondere mit einem gasförmigen oder flüssigen Medium, vorzugsweise Flüssiggas, betreibbar ist, umfassend
einen Tank (12) für den Betriebsstoff, der einen zylindrischen Mantel (14) mit einer sich in axialer Richtung (Y) erstreckenden Mittenachse (16) aufweist, und
zumindest eine an dem Kraftfahrzeug montierbare Halteeinrichtung (18), an der der Tank (12) mittels zumindest eines Spannbandes (20) fixiert ist,
wobei eine in Gebrauchslage des Tanks (12) vertikale Mittenebene (22) des Tanks (12), die die Mittenachse (16) enthält, eine fahrzeugseitige Seite (24) des Tanks (12) und eine dem Kraftfahrzeug abgewandte Seite (26) des Tanks (12) definiert, und
zumindest eine an den Tank (12) angeschlossene Armatur (28) zumindest teilweise auf der fahrzeugseitigen Seite (24) des Tanks (12) angeordnet und unter dem Spannband (20) hindurchgeführt ist.

2. Tanksystem (10) nach Anspruch 1,
wobei eine in Gebrauchslage des Tanks (12) horizontale Mittenebene (30) des Tanks (12), die die Mittenachse (16) enthält, eine Tankoberseite (32) und eine Tankunterseite (34) definiert, und
wobei die Armatur (30) auf der Tankoberseite (32) angeordnet ist.

3. Tanksystem (10) nach Anspruch 1 oder 2,
wobei die Halteeinrichtung (18) einen Stegabschnitt (36) aufweist, der zumindest abschnittsweise nicht an dem Mantel (14) anliegt, insbesondere in Gebrauchslage nicht im Bereich der Tankoberseite (32).

4. Tanksystem (10) nach Anspruch 3,
wobei die Armatur (28) zumindest teilweise in einem Zwickel (44) angeordnet ist, der zwischen dem Mantel (14), dem Spannband (20) und dem Stegabschnitt (36) der Halteeinrichtung (18) eingeschlossen ist.

5. Tanksystem (10) nach zumindest einem der vorherigen Ansprüche,
wobei die Halteeinrichtung (18) einen Montageabschnitt (38) aufweist, der an die Krümmung des Mantels (14) angepasst ist und zumindest teilweise an dem Mantel (14) anliegt, insbesondere in Gebrauchslage im Bereich der Tankunterseite (34).

6. Tanksystem (10) nach zumindest einem der vorherigen Ansprüche, ferner umfassend
ein Gehäuse (46), das die Armatur (28) zumindest teilweise abdeckt, wobei das Spannband (20) in axialer Richtung (Y) neben dem Gehäuse (46) angeordnet ist, insbesondere wobei zumindest zwei Spannbänder (20) vorgesehen sind, zwischen denen das Gehäuse (46) angeordnet ist.

7. Tanksystem (10) nach Anspruch 6,
wobei das Gehäuse (46) zwei oder mehr, insbesondere vier, entlang der axialen Richtung (Y) nebeneinander angeordnete Gehäusesegmente (46a-d) umfasst und wobei zwischen den Gehäusesegmenten (46a-d) jeweils ein Spannband (20) vorgesehen ist.

8. Tanksystem (10) nach Anspruch 6 oder 7,
wobei das Gehäuse (46) an dem Mantel (14) lösbar und/oder auf- und zuklappbar, insbesondere mittels zumindest einer Schraub-, Rast-, Steck- und/oder Klemmverbindung und/oder einem Scharnier, fixiert ist.

9. Tanksystem (10) nach zumindest einem der Ansprüche 6 bis 8,
wobei die Armatur (28) durch zumindest eine Öffnung (48) des Gehäuses (46) zugänglich ist, insbesondere wobei die Öffnung (48) mit einem Deckel verschließbar ist.

10. Tanksystem (10) nach zumindest einem der Ansprüche 7-9,
wobei das Spannband (20) nicht über das Gehäuse (46) geführt ist.

11. Tanksystem (10) nach zumindest einem der vorherigen Ansprüche,
wobei das Spannband (20) zumindest abschnittsweise eine Beschichtung (50) aufweist, insbesondere wobei die Beschichtung (50) eine Gummierung umfasst, die an zumindest einer Kante des Spannbandes (20) vorgesehen ist und/oder das Spannband (20) in Umfangsrichtung umschließt.

12. Tanksystem (10) nach Anspruch 11,
wobei die Beschichtung (50, 57) in einem dem Gehäuse (46) benachbarten und/oder zugewandten Bereich angeordnet ist.

13. Tanksystem (10) nach zumindest einem der Ansprüche 7-12,
wobei das Gehäuse (46) einen Kantenschutz (59) aufweist, insbesondere wobei ein Dichtelement an zumindest einer der dem Spannband (20) zugewandten Kante des Gehäuses (46) vorgesehen ist.

14. Tanksystem (10) nach zumindest einem der Ansprüche 7-12,
wobei das Gehäuse (46) benachbart zu dem Spannband (20) einen vertikalen Abschnitt (54) aufweist, der von dem Gehäuse (46) zu dem Mantel (14) hinragt.

15. Tanksystem (10) nach einem der vorherigen Ansprüche,
wobei ein erstes Ende (52a) des Spannbands (20) an dem Stegabschnitt (36), insbesondere an einem oberen Ende (40) des Stegabschnitts (36), fixiert ist, und ein zweites Ende (52b) des Spannbands (20) an dem Montageabschnitt (38) fixiert ist.
